(19) Europäisches Patentamt
European Patent Office
Office européen des brevets

(11) Veröffentlichungsnummer: **0 014 363**
**B1**

(12) **EUROPÄISCHE PATENTSCHRIFT**

(45) Veröffentlichungstag der Patentschrift: **17.11.82**

(51) Int. Cl.³: **C 01 G 49/02**, G 11 B 5/62, H 01 F 1/11, C 09 C 1/24

(21) Anmeldenummer: **80100264.3**

(22) Anmeldetag: **21.01.80**

(54) **Kobalt-dotierte ferrimagnetische Eisenoxide und Verfahren zu deren Herstellung.**

(30) Priorität: **31.01.79 DE 2903593**

(43) Veröffentlichungstag der Anmeldung: **20.08.80 Patentblatt 80/17**

(45) Bekanntmachung des Hinweises auf die Patenterteilung: **17.11.82 Patentblatt 82/46**

(84) Benannte Vertragsstaaten: **BE DE FR GB IT NL**

(56) Entgegenhaltungen:

| | |
|---|---|
| EP-A-0 003 100 | DE-A-2 507 420 |
| DE-A-2 022 013 | DE-A-2 526 363 |
| DE-A-2 243 231 | DE-A-2 629 931 |
| DE-A-2 252 564 | DE-A-2 649 714 |
| DE-A-2 254 810 | DE-A-2 705 967 |
| DE-A-2 308 791 | DE-A-2 829 344 |
| DE-A-2 352 440 | DE-B-1 907 236 |
| DE-A-2 413 430 | US-A-4 136 049 |

(73) Patentinhaber: **BAYER AG, Zentralbereich Patente, Marken und Lizenzen, D-5090 Leverkusen 1, Bayerwerk (DE)**

(72) Erfinder: **Buxbaum, Gunter, Dr., Holzapfelweg 2, D-4150 Krefeld 1 (DE)**
Erfinder: **Schopper, Heinrich-Christian, Dr., Buschstrasse 149, D-4150 Krefeld 1 (DE)**
Erfinder: **Leitner, Lutz, Dr., Buschstrasse 151, D-4150 Krefeld 1 (DE)**
Erfinder: **Hahnkamm, Volker, Dr., Doerperhofstrasse 14, D-4150 Krefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Kobalt-dotierte ferrimagnetische Eisenoxide und Verfahren zu deren Herstellung

Die vorliegende Erfindung betrifft kobalt-dotierte ferrimagnetische Eisenoxide mit geringem Kobaltgehalt und hohen Koerzitivkräften sowie ein Verfahren zu deren Herstellung.

Kobalt-dotierte Eisenoxidpigmente in der Form des $\gamma$-$Fe_2O_3$ oder $Fe_3O_4$ oder Mischphasen aus $Fe_3O_4$ und $\gamma$-$Fe_2O_3$ werden für die magnetische Signalaufzeichnung vorzugsweise in hochwertigen Audio- und Videobändern verwendet. Sie zeigen ein günstigeres magnetothermisches Verhalten und geringeren Kopfabschliff als Chromdioxid.

Für den genannten Anwendungszweck sind insbesondere Koerzitivfeldstärken von 48 – 80 $kAm^{-1}$ von Interesse, wobei gegenwärtig der Bereich von 48 – 64 $kAm^{-1}$ technisch genutzt wird. Da keine undotierten magnetischen Eisenoxide bekannt sind, deren Koerzitivkraft $I^HC$ nach Einarbeitung in ein Band Werte von oberhalb 40 $kAm^{-1}$ erreichen, wurden schon vor längerer Zeit Kobalt-dotierte Eisenoxide entwickelt, bei denen die Kobaltdotierung entweder durch Mitfällung bei der $\alpha$-FeOOH-Herstellung, durch Auffällung auf $\alpha$-FeOOH- oder $\alpha$-$Fe_2O_3$-Vorläuferverbindungen oder auf $\gamma$-$Fe_2O_3$ vorgenommen wurde.

Zum Erreichen der geforderten hohen Koerzitivfeldstärken ist nach dem Stand der Technik ein relativ hoher Kobaltgehalt in den Pigmenten notwendig. Durch die hohen Kobaltgehalte wird das magnetothermische Verhalten verschlechtert, d. h. es tritt eine Abnahme von Sättigungsmagnetisierung, Remanenz und Koerzitivfeldstärke bei steigender Temperatur auf.

Es hat nicht an Versuchen gefehlt, diesen Abfall der Eigenschaften zu verringern. Nach dem Stand der Technik werden die genannten Nachteile durch oberflächlich mit Kobalt umhüllte Pigmente verringert (s. z. B. Y. Tokuoka, S. Umeki, Y. Imaoka; Europhy. Conf. Abstr. 1976 2B, Int. Conf. Ferrites, S. 92 – 93). Dabei wurde vielfach vorgeschlagen, durch komplizierte Auffällungsverfahren, sogenanntes epitaxiales Aufwachsen, Verbesserungen zu erzielen, jedoch wurde keine Verringerung des notwendigen Kobaltgehaltes erreicht. Die hohe Koerzitivfeldstärke und das günstige thermisch-magnetische Verhalten derartig hergestellter Substanzen sollen auf die ausgeprägte inhomogene Kobaltverteilung innerhalb des Einzelteilchens zurückzuführen sein, wobei die Kobaltionen überwiegend an der Kristallitoberfläche bzw. im oberflächennahen Bereich lokalisiert sein sollen. Von einer Kobalt-Dotierung kann in diesen Fällen nicht mehr gesprochen werden.

Die US-A-4 136 049 beschreibt ein Verfahren zur Herstellung hochkoerzitiver Kobalt-dotierter Eisenoxidpigmente, die alle einen hohen $Fe^{2+}$-Gehalt aufweisen. Diese Pigmente haben aber eine Neigung zur Selbstoxidation.

Es wurde nun gefunden, daß Eisenoxidpigmente, in denen eine im wesentlichen homogene Kobaltverteilung vorliegt, bei sehr geringem Kobaltgehalt überlegene magnetische Eigenschaften aufweisen, wenn die homogene Kobaltverteilung strukturell stabilisiert ist.

Gegenstand der vorliegenden Erfindung sind daher Kobalt-dotierte, nadelförmige, ferrimagnetische Eisenoxide mit einem FeO-Gehalt von 16 bis 24 Gew.-% und einem Gehalt von 0,7 bis 2,4 Gew.-% Kobalt, wobei die Koerzitivkraft mindestens 34 + 14 $kAm^{-1}$/Gew.-% Co beträgt.

Bevorzugt beträgt die Koerzitivkraft der erfindungsgemäßen Eisenoxide mindestens 34 + 16 $kAm^{-1}$/Gew.-% Kobalt. Der FeO-Gehalt beträgt vorzugsweise 20 bis 23 Gew.-%. Im derzeit für hochwertige Audio- und Videobänder technisch genutzten Bereich von 48 – 64 $kAm^{-1}$ liegen Eisenoxidpigmente mit einem Kobaltgehalt von vorzugsweise 1 bis 2 Gew.-%.

Die erfindungsgemäßen Eisenoxidpigmente können neben Kobalt auch andere Ionen wie z. B. Calcium, Magnesium, Mangan, Cadmium, Kupfer, Chrom, Nickel, Zink, Aluminium, Titan, Zirkon, $SiO_2$, $B_2O_3$ und/oder $P_2O_5$ enthalten. Bevorzugt ist ein Gehalt von 0,1 bis 2 Gew.-% Zink, besonders bevorzugt Gehalte von 0,1 bis 2 Gew.-% Zink und 0,1 bis 2 Gew.-% $P_2O_5$.

Derartige Magnetpigmente eignen sich vorzüglich zum Einsatz in Audiobändern für den $CrO_2$-Arbeitspunkt und als Oberschicht in Mehrschichtbändern.

Die erfindungsgemäßen Eisenoxidpigmente sind insbesondere zur Verwendung für die neuen Video-Aufzeichnungssysteme, z. B. VHS, Betamax und LVR geeignet. Aufgrund der langsamen Bandgeschwindigkeit ist für gute Audioeigenschaften eine hohe Ausrichtbarkeit ($B_r/B_s$ = remanente Magnetisierung/Sättigungsmagnetisierung in Bandrichtung gemessen) notwendig. Die erfindungsgemäßen Pigmente weisen Ausrichtbarkeitswerte von größer als 0,8, vorzugsweise von größer als 0,85 auf, und sind daher für diesen Einsatz hervorragend geeignet.

Die erfindungsgemäßen Pigmente erreichen insbesondere in dem technisch genutzten Bereich die geforderten Koerzitivfeldstärken von 48 – 64 $kAm^{-1}$ bei etwa halbiertem Kobaltgehalt gegenüber den besten bekannten bzw. auf dem Markt befindlichen Eisenoxidpigmenten.

Fig. 1 zeigt ein Diagramm, in dem die Abhängigkeit der Koerzitivfeldstärke $I^HC$ in Abhängigkeit vom Kobaltgehalt der Pigmente dargestellt ist. Die eingezeichnete Gerade gibt den Zusammenhang

$$I^HC = 34 + 14 \cdot p$$

wieder, wobei $I^HC$ die Koerzitivfeldstärke in $kAm^{-1}$ und p den Kobaltgehalt in Gew.-% beschreiben. Die oberhalb der Kurve liegenden Kreuze zeigen den mit den nachfolgenden Beispielen erhaltenen Zusammenhang für die erfindungsgemäßen Pigmente. Die in das Diagramm eingezeichneten Buchstaben zeigen den entsprechenden Zusammenhang für die besten kobalthaltigen Eisenoxidpigmente des Standes der Technik bzw. von auf dem Markt zugänglichen Handelsprodukten. Die in dem Diagramm angegebenen Buchstaben weisen im einzelnen auf folgende Quellen hin:

A: DE-A-2 308 791
B: DE-A-2 413 430
C: DE-A-2 649 714
D: DE-B-1 907 236
E: DE-A-2 629 931
F: DE-A-2 252 564
G: XMO 497, ein Handelsprodukt der Fa. Hercules Powders Inc.
H: 2566, ein Handelsprodukt der Fa. Pfizer.

Aufgrund ihres geringeren Kobaltgehaltes zeigen die erfindungsgemäßen Eisenoxidpigmente ein überlegenes magnetothermisches Verhalten, d. h. eine verbesserte Temperaturstabilität von Sättigungsmagnetisierung, Remanenz und Koerzitivfeldstärke.

Überraschenderweise steigen beim Einarbeiten des erfindungsgemäßen Magnetpigmentes in ein Magnetband, das in üblicher Weise durch 3½stündige Mahlung in einer Perlmühle von

| | |
|---|---|
| 26,85 Gew.-% | magnetisches Eisenoxid, |
| 6,71 Gew.-% | Polyesterurethan (Esthane 5707 F 1 v. B. F. Goodrich Corp.), |
| 1,01 Gew.-% | komplexe Phosphorsäureester, |
| 0,67 Gew.-% | Di(äthylhexyl)-phthalat, |
| 0,03 Gew.-% | Silikonöl, |
| 0,27 Gew.-% | Butoxy-aethylstearat, |
| 44,6 Gew.-% | Tetrahydrofuran, |
| 6,35 Gew.-% | Cyclohexanon, |
| 13,51 Gew.-% | Methyläthylketon, |

anschließendem Vergießen des Lackes auf einer dreifach gereckten Polyesterfolie, Richten im Magnetfeld, Trocknen und Kalandern hergestellt wird, die Koerzitivfeldstärken in Bandrichtung gemessen, um bis zu 8 $kAm^{-1}$, an. Es werden so mit ca. 1,2 Gew.-% Kobalt am Band Koerzitivfeldstärken von 64 $kAm^{-1}$ und mehr erreicht.

Ein weiterer leichter Koerzitivkraftanstieg in der Größenordnung bis ca. 5% wird häufig bei der Lagerung der Pigmente unter Atmosphärenbedingungen oder auch unter Luftausschluß bei Raumtemperatur in einem Zeitraum von ca. 1 Monat oder darüber beobachtet.

Gegenstand der vorliegenden Erfindung ist auch ein Verfahren zur Herstellung der erfindungsgemäßen Kobalt-dotierten Eisenoxidpigmente, indem aus wäßrigen Eisen(II)-Salzlösungen durch Fällung und Oxidation zumindest teilweise in Gegenwart von Kobaltionen gewonnenes nadelförmiges kobalthaltiges Eisen(III)-oxidhydroxid durch Modifizierung mit anorganischen oder elementorganischen Verbindungen gegen Versinterung geschützt werden, und danach zum $Fe_3O_4$ reduziert und zur Einstellung des FeO-Gehaltes in einem sauerstoffhaltigen Gas partiell reoxidiert werden, das dadurch gekennzeichnet ist, daß nach der Einstellung des FeO-Gehaltes eine Temperaturbehandlung bei 600 bis 800°C unter inerten Bedingungen durchgeführt wird.

Die Einführung der Kobaltionen kann in jeder Phase der Fällungsreaktion erfolgen. Es ist auch möglich, das Kobalt nach Abschluß der Fällung auf die FeOOH-Teilchen aufzufällen, jedoch muß dies noch in der Fällungssuspension erfolgen. Vorteilhaft wird das Kobalt bei der $\alpha$-FeOOH-Fällung mitgefällt. Besonders bevorzugt erfolgt die Kobaltfällung durch Zugabe von wasserlöslichen Kobaltsalzen von Mineralsäuren, insbesondere Schwefelsäure, nachdem bereits $\alpha$-FeOOH-Keime gebildet worden sind, da auf diese Weise eine besonders enge Pigmentteilchengrößenverteilung erreicht wird.

Die Modifizierung mit anorganischen Verbindungen gegen Versinterung kann durch gleichzeitige Fällung von Ionen, z. B. des Calcium, Magnesium, Mangan, Cadmium, Kupfer, Chrom, Nickel, Zink, Aluminium, Titan und/oder Zirkon und/oder von $SiO_2$, $B_2O_3$ oder $P_2O_5$ erfolgen. Die Ionen werden als wasserlösliche Verbindungen, bevorzugt Mineralsäuren, z. B. Salze der Schwefelsäure, in die Fällungssuspension eingeführt. Dabei sind Mengen zwischen 0,1 und 5% der Modifizierungssubstanzen, bezogen auf das Eisenoxid ausreichend. Die Modifizierungssubstanzen können auch nach abgeschlossener Fällung des Eisenoxidhydroxids auf die FeOOH-Teilchen aufgefällt werden. Die Auffällung soll dann in der Fällungssuspension erfolgen.

Die erhaltenen $\alpha$-FeOOH-Teilchen werden von der Fällungssuspension abgetrennt, in üblicher Weise gewaschen und entwässert und anschließend vorteilhaft bei Temperaturen von 600 bis 800°C getempert. Daran schließt sich die Reduktion zum $Fe_3O_4$ mit feuchtem Wasserstoff bei Temperaturen zwischen 300 und 500°C an. Nach Abkühlung des Magnetits auf 100 bis 200°C wird durch Zufuhr einer definierten Luftmenge, die vorzugsweise mit Stickstoff verdünnt wird, der erfindungsgemäße FeO-Gehalt von 16 bis 24 Gew.-% eingestellt.

Das erfindungsgemäße Verfahren findet seine bevorzugte Ausgestaltung durch die Anwendung des Verfahrens gemäß US-Patentschrift 3 931 025. Danach wird unter Zusatz von Zink- und Phosphationen eine $\alpha$-FeOOH-Keimsuspension hergestellt und unter Zusatz der gewünschten Menge Kobalt in Form wasserlöslicher Salze die Pigmentbildung unter Zufuhr von Alkalien durchgeführt. Gegen Ende der Pigmentbildung wird eine Lösung von Phosphaten, bevorzugt Pyrophosphat, in Mengen von ca. 0,2 bis 1 Gew.-% $P_2O_5$ zugesetzt. Das $\alpha$-(FeCO)OOH-Pigmentpulver wird wie beschrieben entwässert, getempert, zu Magnetit reduziert und reoxidiert, wobei die Reoxidation nur bis zu dem erfindungsgemäßen FeO-Gehalt durchgeführt wird.

Der entscheidende Schritt des erfindungsgemäßen Verfahrens ist ein Tempervorgang, nach dem die endgültige Einstellung des FeO-Gehal-

tes erfolgt ist. Hierbei stellt sich eine im wesentlichen homogene Kobaltverteilung im Pigment ein, sowie eine offenbar spezifische strukturelle Stabilisierung des Pigmentes, die für die hohen erfindungsgemäßen Koerzitivkräfte verantwortlich ist.

Die Temperung wird vorzugsweise in einer Atmosphäre aus $CO_2$ und/oder $N_2$ durchgeführt. Ein geringer Sauerstoffgehalt in der Atmosphäre, der etwa in der Größenordnung des Sauerstoffpartialdrucks von $CO_2$ bei der angewandten Temperatur liegt, ist vorteilhaft, ohne daß dadurch der FeO-Gehalt beeinflußt wird.

Überraschenderweise führt eine solche Temperung bei hohen Temperaturen nicht zu einer zu erwartenden Verschlechterung der Remanenz durch Bildung von $\alpha$-$Fe_2O_3$, sondern es wird besonders überraschend noch eine Erhöhung der remanenten Magnetisierung beobachtet.

Es ist nicht auszuschließen, daß in geringem Maße eine Zerfallsreaktion etwa nach der Art:

$$5\,FeO_{1,4} \longrightarrow Fe_3O_4 + \alpha\text{-}Fe_2O_3$$

stattfindet. Das gebildete $\alpha$-$Fe_2O_3$ ist jedoch so feinkristallin abgeschieden, daß es röntgenografisch nicht erfaßbar ist. Es kann auch epitaxial auf der kubischen $Fe_3O_4$-Phase so abgeschieden sein, daß es durch Gitterspannung zu dem überraschenden Anstieg der Koerzitivfeldstärke führt. Ohne daß in nennenswertem Umfang Kristallitwachstum stattfindet, werden durch die Temperung bei Temperaturen oberhalb von 600° C die kristalline Ordnung der Fehlordnungsphasen $Fe_3O_4$-$\gamma$-$Fe_2O_3$ erhöht, Gitterdefekte ausgeheilt und so die magnetischen Eigenschaften verbessert. Obwohl noch keine Beweise vorhanden sind, kann angenommen werden, daß sich bei der Temperung eine Ordnungsphase als Strukturvariante der Spinellstruktur etwa der Zusammensetzung

$$Fe_{24}[Fe^{+3}_{30}(Fe_{14}, Co)^{+2}\,\square_3]O_{96}$$

bei einem Kobalt-Gehalt von ca. 1,1 Gew.-% ausbildet. Die Ionen in den eckigen Klammern repräsentieren dabei die Ionen bzw. die Gitterleerstellen, symbolisiert durch □, mit oktaedrischer Sauerstoffkoordination, die außerhalb der Klammer stehenden Eisen-Ionen sind diejenigen mit tetraedrischer Sauerstoffkoordination. Eine derartige Überstruktur könnte auch den überraschenden Koerzitivfeldstärkeanstieg erklären.

Die Temperung kann sich über einen Zeitraum von wenigen Minuten bis mehrere Stunden erstrecken, wobei die kürzeren Temperzeiten bei höheren Temperaturen angewendet werden. Bevorzugt ist eine Temperung zwischen 600 und 700° C während einer Zeitdauer von 10 Minuten bis 1 Stunde. Wichtig ist, daß auch die Abkühlung noch unter Inertgas erfolgt.

An die Temperung kann eine Stabilisierung gegen Luftoxidation gemäß DE-A-2 625 106 angeschlossen werden. Eine üblicherweise durchgeführte Verdichtung mit Kugelmühlen oder Walzenverdichtern kann ebenso erfolgen wie eine der üblichen Nachbehandlungen zur Verbesserung der Dispergierbarkeit in Lacken.

Die vorliegende Erfindung wird anhand der nachfolgenden Vergleichsbeispiele 1, 2, 3 und 5 sowie der erfindungsgemäßen Beispiele 4, 6, 7 und 8 näher erläutert. Die Messung der Koerzitivfeldstärke und remanenten Magnetisierung erfolgt dabei mit einem Probenvibrationsmagnetometer bei einer maximalen Feldstärke von 280 $kAm^{-1}$. Da die Koerzitivfeldstärke dichteabhängig ist, wurden die Proben auf eine Dichte von ca. 0,6 $g/cm^3$ verdichtet. Bei dieser Dichte ist die $I^HC$-Abhängigkeit noch nicht so groß, daß bei kleinen Abweichungen der Dichte die Meßwerte störende Abweichungen zeigen.

## Beispiel 1
## (Vergleichsbeispiel)

Zu 22 l $FeSO_4$-Lösung mit 135 g/l werden 28,3 g $ZnSO_4 \cdot 7\ H_2O$ in 0,2 l $H_2O$, 16,7 g $KCr(SO_4)_2 \cdot 12\,H_2O$ in 0,2 l $H_2O$ und 11,5 g $NaH_2PO_4 \cdot 2\,H_2O$ in 0,2 l $H_2O$ gegeben und mit 1,19 l Natronlauge mit 622 g/l verdünnt auf 1,8 l bei 30° C versetzt. Unter gleichmäßigem Aufheizen bis 75° C wird in 5 h unter Rühren mit 300 l Luft/h eine $\alpha$-FeOOH-Keim-Suspension hergestellt. Im Anschluß wurde eine Lösung von 97,2 g $CoSO_4 \cdot 7\,H_2O$ in 0,3 l $H_2O$ zugefügt und in 16 Stunden durch gleichmäßige Natronlaugezufuhr (195 g/l) unter Lufteinleiten und Rühren der pH-Wert von 2,8 auf 4,0 angehoben. Dann wird in 2 Stunden der pH-Wert bis auf 7,5 erhöht und während 30 Minuten eine Lösung von 20,7 g $Na_4P_2O_7$ in 0,6 l $H_2O$ zugegeben und weitere 30 Minuten nachgerührt. Nach Waschen und Trocknen bei 120° C wurde das $\alpha$-FeOOH-Pigment bei 300° C entwässert und 30 Minuten bei 600° C getempert. Die Reduktion zu $Fe_3O_4$ erfolgte bei 400° C mit feuchtem Wasserstoff in 30 Minuten. Unter Stickstoff wurde abgekühlt. Die remanente Magnetisierung betrug $Br/\varrho = 44.1\ nTm^3g^{-1}$ die Koerzitivfeldstärke $I^HC = 32 \cdot 8\ kAm^{-1}$.

## Beispiel 2
## (Vergleichsbeispiel)

Das Produkt aus Beispiel 1 wurde 30 Minuten bei 650° C getempert: $Br/\varrho = 47.1\ nTm^3g^{-1}$, $I^HC = 37\ kAm^{-1}$.

## Beispiel 3
## (Vergleichsbeispiel)

60 g Produkt aus Beispiel 1 wurden während 30 Minuten bei 170° C mit 7,5 l Luft/h und 100 l $N_2$/h in einem Röhrenofen behandelt: $Br/\varrho = 45.3\ nTm^3g^{-1}$, $I^HC = 36.4\ kAm^{-1}$.

Beispiel 4

Das magnetische Pigment aus Beispiel 3 wurde 30 Minuten bei 650°C unter $N_2/CO_2$ getempert: $Br/\varrho = 50.1$ $nTm^3g^{-1}$ $I^HC = 57.7$ $kAm^{-1}$. Die Analyse ergab 21,5 Gew.-% FeO und 1,35 Gew.-% Co. Am Magnetband wurde an dieser Probe $I^HC = 64.1$ $kAm^{-1}$ bestimmt.

Beispiel 5
(Vergleichsbeispiel)

60 g Magnetpigment aus Beispiel 1 wurden während 30 Minuten bei 170°C mit 8,8 l Luft/h und 100 l $N_2$/H behandelt: $Br/\varrho = 45.5$ $nTm^3g^{-1}$, $I^HC = 38.2$ $kAm^{-1}$.

Beispiel 6

Das Produkt aus Beispiel 5 wurde 30 Minuten bei 650°C unter $N_2/CO_2$ getempert. Der FeO-Gehalt betrug 19,2 Gew.-% $Br/\varrho = 48.0$ $nTm^3g^{-1}$ und $I^HC = 56.7$ $kAm^{-1}$. Die Koerzitivkraftausbeute betrug 17.0 $kAm^{-1}$/Gew.-% Co. Am Magnetband wurde $B_r/B_s$ 0,85 und $I^HC$ zu 64.7 $kAm^{-1}$ bestimmt.

Beispiel 7

Aus 8000 kg $FeSO_4$, 75,7 kg $ZnSO_4 \cdot 7\,H_2O$ und 30,9 kg $NaH_2PO_4 \cdot 2\,H_2O$ in 40 $m^3$ $H_2O$ wird mit 2000 kg NaOH in 5 $m^3$ $H_2O$ wie unter Beispiel 1a mit ca. 1000 $m^3$ Luft/h die Keimsuspension in 5,5 Stunden hergestellt und nach Zugabe von 245,5 kg $CoSO_4 \cdot 7\,H_2O$ durch weitere Zufuhr von Natronlauge und Luft die Pigmentbildung innerhalb von 16 Stunden bis pH 3,5 durchgeführt, dann wird jeweils nach 15 Minuten der pH-Wert um 0,2 Einheiten erhöht. Bei pH = 7,5 werden 15 l der Pigmentsuspension entnommen und bei 80°C mit einer Emulsion von 4,55 g eines Polydimethylsiloxanes (erhältlich unter der Bezeichnung Silikonöl M 100 der Fa. Bayer AG) in 73 ml $H_2O$ unter Rühren und Lufteinleiten versetzt und 15 Minuten nachgerührt. Anschließend wurde eine Lösung von 3,4 g $Na_4P_2O_7$ in 0,2 l $H_2O$ zugetropft und 30 Minuten nachgerührt. Nach Waschen und Trocknen wurde das Pigmentpulver bei 300°C entwässert, bei 640°C 30 Minuten getempert und bei 400°C mit feuchtem Wasserstoff reduziert: $Br/\varrho = 44.1$ $nTm^3g^{-1}$, $I^HC = 31.2$ $kAm^{-1}$.

In der Wirbelschicht wurden 130 g dieses Produktes 12 Minuten bei 190°C mit Luft/$N_2$ anoxidiert und 30 Minuten bei 650°C unter $N_2/CO_2$ getempert: $Br/\varrho = 47.8$ $nTm^3g^{-1}$, $I^HC = 57.9$ $kAm^{-1}$, FeO-Gehalt 21 Gew.-%, Co-Gehalt 1,25 Gew.-%.

In ein Magnetband eingearbeitet ergibt sich eine Koerzitivfeldstärke von 63.7 $kAm^{-1}$.

Beispiel 8

264 l Eisensulfatlösung mit 135 g/l werden mit 340 g $ZnSO_4 \cdot 7\,H_2O$ und 137 g $NaH_2PO_4 \cdot 2\,H_2O$ versetzt. Unter Rühren bei 30°C werden 20 l Natronlauge mit 480 g/l in 10 Minuten zugesetzt. Mit 0,7 $m^3$ Luft/h wird innerhalb von 5,5 Stunden die Keimbildung durchgeführt. Dabei wird die Temperatur gleichmäßig auf 77°C erhöht. Unter weiterer geregelter Natronlaugezufuhr (200 g/l) und Begasung mit 8 $m^3$ Luft/h wird in 14,5 Stunden die Pigmentbildung durchgeführt. 11 Stunden nach Beginn der Pigmentbildung wird bei pH = 3,6 und einem Verbrauch von 40 l Lauge eine Lösung von 2,09 kg $CoSO_4 \cdot 7\,H_2O$ in 4 l $H_2O$ zugesetzt.

Bei pH = 7,5 wird eine Lösung von 196 g $Na_4P_2O_7$ in 4 l $H_2O$ in 30 Minuten zugegeben und 30 Minuten gerührt. Nach Waschen und Trocknen wird das $\alpha$-FeOOH-Vorprodukt bei 600°C 30 Minuten getempert, 30 Minuten mit feuchtem Wasserstoff bei 400°C reduziert, 18 Minuten bei 170°C mit Luft oxidiert und 30 Minuten bei 650°C unter $N_2/CO_2$ getempert: FeO-Gehalt = 17 Gew.-%, Co-Gehalt = 2,3 Gew.-%, $Br/\varrho = 46.0$ $nTm^3g^{-1}$, $I^HC = 74.6$ $kAm^{-1}$.

**Patentansprüche**

1. Kobalt-dotierte nadelförmige, ferrimagnetische Eisenoxide mit einem Gehalt von 0,7 bis 2,4 Gew.-% Kobalt, dadurch gekennzeichnet, daß es einen FeO-Gehalt von 16 bis 24 Gew.-% aufweist, wobei die Koerzitivkraft mindestens 34 $kAm^{-1}$ + 14 $kAm^{-1}$/Gew.-% Co beträgt.

2. Eisenoxide nach Anspruch 1, wobei die Koerzitivkraft mindestens 34 $kAm^{-1}$ + 16 $kAm^{-1}$/Gew.-% Co beträgt.

3. Eisenoxide nach Anspruch 1 oder 2 mit einem Kobaltgehalt von 1 bis 2 Gew.-%.

4. Eisenoxide nach einem der Ansprüche 1 bis 3, enthaltend 0,1 bis 2 Gew.-% Zink.

5. Eisenoxide nach einem der Ansprüche 1 bis 4, enthaltend 0,1 bis 2 Gew.-% Zink und 0,1 bis 2 Gew.-% Phosphor, gerechnet als $P_2O_5$.

6. Eisenoxide nach einem der Ansprüche 1 bis 5 mit einer magnetischen Ausrichtbarkeit $B_r/B_s$ von oberhalb 0,85.

7. Verfahren zur Herstellung der Eisenoxidpigmente nach einem der Ansprüche 1 bis 6, indem aus wäßrigen Eisen(II)-Salzlösungen durch Fällung und Oxidation zumindest teilweise in Gegenwart von Kobaltionen gewonnenes nadelförmiges kobalthaltiges Eisen(III)-oxidhydroxid durch Modifizierung mit anorganischen Verbindungen gegen Versinterung geschützt, danach zum $Fe_3O_4$ reduziert und zur Einstellung des FeO-Gehaltes in sauerstoffhaltigem Gas partiell reoxidiert wird, dadurch gekennzeichnet, daß nach der Einstellung des FeO-Gehaltes eine Temperaturbehandlung bei 600 bis 800°C unter inerten Bedingungen durchgeführt wird.

8. Verfahren nach Anspruch 7, dadurch gekennzeichnet, daß die Temperaturbehandlung

unter einem Schutzgas aus Stickstoff und $CO_2$ durchgeführt wird.

9. Verfahren nach Anspruch 7 oder 8, dadurch gekennzeichnet, daß die Fällung und Oxidation in Gegenwart von Zinkionen durchgeführt wird und nach Abschluß der Fällung eine wasserlösliche Sauerstoffverbindung des Phosphors in die Fällungssuspension gegeben wird.

10. Verfahren nach einem der Ansprüche 7 bis 9, dadurch gekennzeichnet, daß die Zugabe der Kobaltionen in die Fällungssuspension erfolgt, nachdem sich mindestens bereits FeOOH-Keime gebildet haben.

**Claims**

1. Cobalt-doped, acicular ferrimagnetic iron oxides having a cobalt content of 0.7 to 2.4%, by weight, characterised in that they have a FeO content of 16 to 24%, by weight, the coercive force amounting to at least 34 $kAm^{-1}$ + 14 $kAm^{-1}$/%, by weight, of Co.

2. Iron oxides according to claim 1, having a coercive force of at least 34 $kAm^{-1}$ + 16 $kAm^{-1}$/%, by weight, of Co.

3. Iron oxides according to claim 1 or 2, having a cobalt content of 1 to 2% by weight.

4. Iron oxides according to one of claims 1 to 3, containing 0.1 to 2%, by weight, of zinc.

5. Iron oxides according to one of claims 1 to 4, containing 0.1 to 2%, by weight, of zinc and 0.1 to 2%, by weight, of phosphorus, expressed as $P_2O_5$.

6. Iron oxides according to one of claims 1 to 5, having a magnetic orientability $B_r/B_s$ above 0.85.

7. Process for the production of the iron oxide pigments according to one of claims 1 to 6 by protecting acicular cobalt-containing iron (III) oxide hydroxide obtained from aqueous iron (II) salt solutions by precipitation and oxidation at least partly in the presence of cobalt ions against sintering by modification with inorganic compounds, followed by reduction to $Fe_3O_4$ and by partial reoxidation in an oxygen-containing gas to adjust the FeO content, characterised in that adjustment of the FeO content is followed by a heat treatment carried out under inert conditions at a temperature of 600 to 800° C.

8. Process according to claim 7, characterised in that the heat treatment is carried out in an inert gas atmosphere of nitrogen and $CO_2$.

9. Process according to claim 7 or 8, characterised in that precipitation and oxidation are carried out in the presence of zinc ions and, after precipitation, a water-soluble oxygen compound of phosphorus is introduced into the precipitation suspension.

10. Process according to one of claims 7 to 9, characterised in that cobalt ions are added to the precipitation suspension after FeOOH seeds have at least already been formed.

**Revendications**

1. Oxydes de fer ferrimagnétiques aciculaires dopés au cobalt, ayant une teneur de 0,7 à 2,4% en poids de cobalt, caractérisé en ce qu'il présente une teneur en FeO de 16 à 24% en poids, la force coercitive s'élevant au moins à 34 $kAm^{-1}$ + 14 $kAm^{-1}$/% en poids de Co.

2. Oxydes de fer selon la revendication 1, la force coercitive s'élevant au moins à 34 $kAm^{-1}$ + 16 $kAm^{-1}$/% en poids de Co.

3. Oxydes de fer selon une des revendications 1 ou 2 avec une teneur en cobalt de 1 à 2% en poids.

4. Oxydes de fer selon une des revendications 1 à 3, contenant 0,1 à 2% en poids de zinc.

5. Oxydes de fer selon une des revendications 1 à 4, contenant 0,1 à 2% en poids de zinc et 0,1 à 2% en poids de phosphore calculé en $P_2O_5$.

6. Oxydes de fer suivant une des revendications 1 à 5 avec une capacité d'orientation magnétique $B_r/B_s$ supérieure à 0,85.

7. Procédé de fabrication de pigments à l'oxyde de fer selon une des revendications 1 à 6, dans lequel de l'oxyde-hydroxyde de fer(III) contenant du cobalt et aciculaire, obtenu à partir de solutions aqueuses de sels de fer(II) par précipitation et oxydation tout au moins partielle en présence d'ions cobalt, est protégé du frittage par modification avec des composés minéraux, est réduit par la suite en $Fe_3O_4$ et est partiellement réoxydé dans du gaz contenant de l'oxygène pour le réglage de la teneur en FeO, caractérisé en ce qu'après le réglage de la teneur en FeO on exécute un traitement thermique à 600−800° C dans des conditions inertes.

8. Procédé selon la revendication 7, caractérisé en ce qu'on exécute le traitement thermique dans un gaz protecteur composé d'azote et de $CO_2$.

9. Procédé selon la revendication 7 ou 8, caractérisé en ce qu'on exécute la précipitation et l'oxydation en présence d'ions zinc et en ce qu'au terme de la précipitation on ajoute dans la suspension de précipitation un composé oxygéné du phosphore soluble dans l'eau.

10. Procédé selon une des revendications 7 à 9, caractérisé en ce que l'addition des ions cobalt a lieu dans la suspension de précipitation après qu'au moins se soient déjà formés des germes de FeOOH.

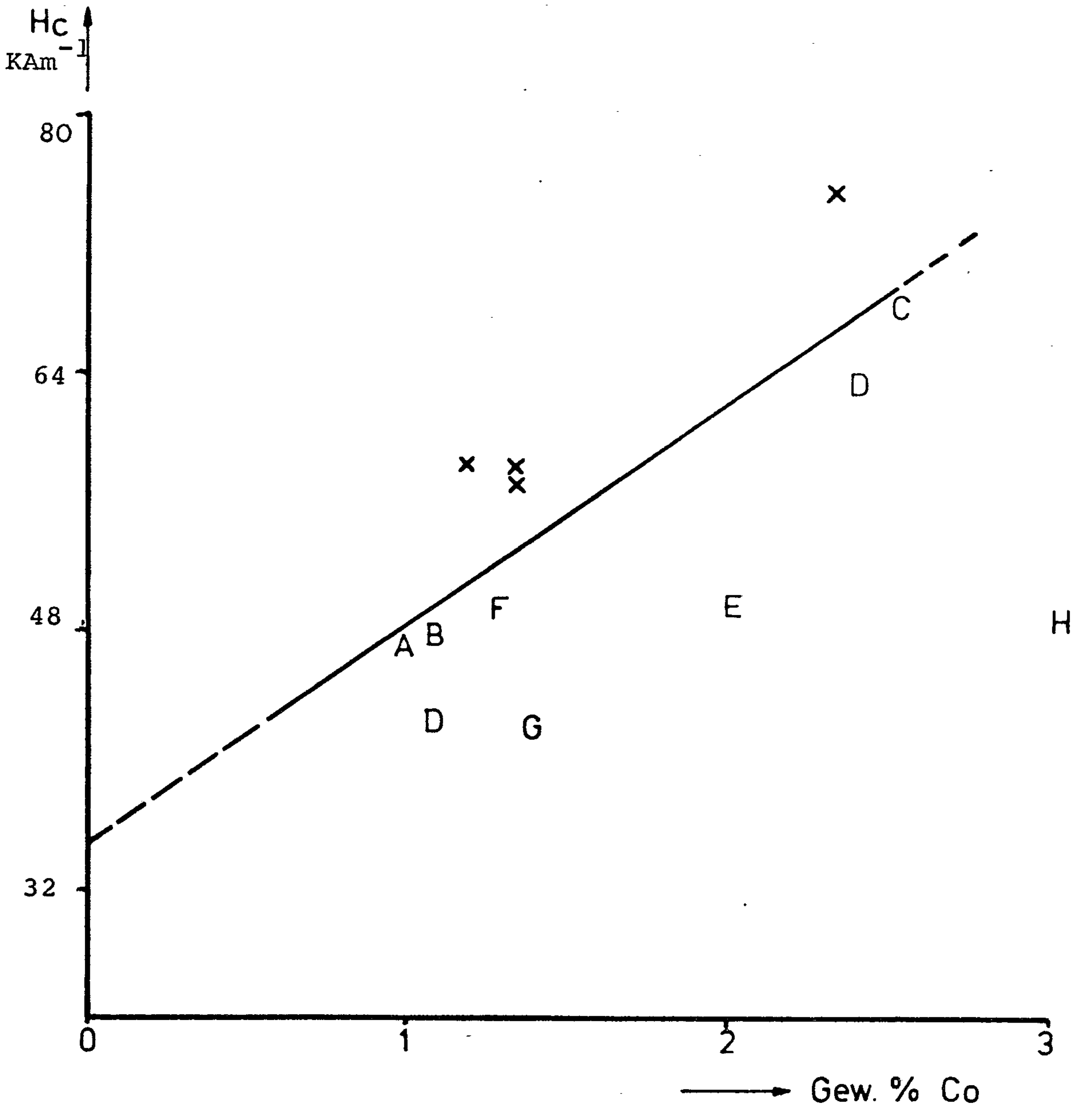


FIG. 1